# EUROPEAN PATENT APPLICATION

(11) **EP 4 746 387 A1**
(43) Date of publication of application: **20.05.2026**
(21) Application number: 25806545.7
(22) Date of filing: 05.02.2025
(51) Int. Cl.: H04L 69/22

(54) **DPU-BASED NETWORK MESSAGE PROCESSING METHOD AND APPARATUS, DEVICE AND MEDIUM**

(30) Priority: 24.05.2024 CN 202410654877
(71) Applicant: Beijing Zitiao Network Technology Co., Ltd., Beijing 100190 (CN)
(72) Inventor: BO, Shoujing, Beijing 100028 (CN); WANG, Yaobao, Beijing 100028 (CN); MO, Hangbin, Beijing 100028 (CN); WEI, Xuechao, Beijing 100028 (CN); WANG, Jian, Beijing 100028 (CN)
(74) Representative: Grünecker Patent- und Rechtsanwälte PartG mbB
(86) International application number: PCT/CN2025/075787
(87) International publication number: WO 2025/241604

(57) **Abstract**

The present disclosure relates to a DPU-based network message processing method, an apparatus, a device, and a medium. The method provided by embodiments of the present disclosure acquires flow processing information matching a target communication port by using an association memory table. It may avoid traversing the entire memory table for matching, improves the speed and efficiency of matching, and reduces the storage space of the memory table. According to the acquired flow processing information, a communication address corresponding to a target communication address may be acquired from a communication address table.

## Description

### CROSS-REFERENCE TO RELATED APPLICATION(S)

The present application claims priority to Chinese Patent Application No. 202410654877.6, filed on May 24, 2024, and entitled "DPU-BASED NETWORK MESSAGE PROCESSING METHOD AND APPARATUS, DEVICE AND MEDIUM", which is hereby incorporated by reference in its entirety.

### FIELD

The present disclosure relates to the field of network communications, and in particular, to a DPU-based network message processing method, an apparatus, a device, and a medium.

### BACKGROUND

A cloud network plays a very important role in the development of cloud computing. With the evolution of services, a data processing unit (Data Processing Unit, DPU for short) is becoming particularly important as a base for hardware virtualization. The DPU also has a strong demand for the network and needs to support functions such as high-speed data transmission and flexible network configuration and management.

When the DPU processes a network message, classification and filtering of the network message mainly rely on matching of an association memory table. The association memory table is used to store and search for related information, to determine the classification of the network message and perform corresponding processing.

### SUMMARY

In view of this, embodiments of the present disclosure provide a DPU-based network message processing method, an apparatus, a device, and a medium.

In a first aspect, an embodiment of the present disclosure provides a DPU-based network message processing method, including:
acquiring a network message currently to be processed by a DPU, where the network message carries a target communication address and a target communication port;
acquiring, based on an association memory table, flow processing information matching the communication port, and acquiring a corresponding communication address from a communication address table by using the flow processing information; and
performing, in response to the communication address being consistent with the target communication address carried in the network message, a corresponding processing operation on the network message.

In a second aspect, an embodiment of the present disclosure provides a DPU-based network message processing apparatus, including:
an acquiring module, configured to acquire a network message currently to be processed by a DPU, where the network message carries a target communication address and a target communication port;
a querying module, configured to acquire, based on an association memory table, flow processing information matching the communication port, and acquire a corresponding communication address from a communication address table by using the flow processing information; and
a performing module, configured to perform, in response to the communication address being consistent with the target communication address carried in the network message, a corresponding processing operation on the network message.

In a third aspect, an embodiment of the present disclosure provides a computer device, including: a memory and a processor, the memory and the processor are connected to each other in communication, the memory stores computer instructions, and the processor executes the computer instructions to perform the method of the first aspect or any implementation corresponding thereto.

In a fourth aspect, an embodiment of the present disclosure provides a computer-readable storage medium, the computer-readable storage medium stores computer instructions, and the computer instructions are used to cause a computer to execute the method of the first aspect or any implementation corresponding thereto.

### BRIEF DESCRIPTION OF THE DRAWINGS

In order to more clearly explain the technical solutions in the specific embodiments of the present disclosure or in the prior art, the following will briefly introduce the drawings that need to be used in the description of the specific embodiments or the prior art. Obviously, the drawings in the following description are some embodiments of the present disclosure. For those of ordinary skill in the art, other drawings may be obtained based on these drawings without creative efforts.
FIG. 1 is a schematic diagram of a design structure of an original CAM table according to some embodiments of the present disclosure;
FIG. 2 is a schematic diagram of a design structure of a CAM table in this embodiment according to some embodiments of the present disclosure;
FIG. 3 is a schematic flowchart of a DPU-based network message processing method according to some embodiments of the present disclosure;
FIG. 4 is a schematic flowchart of a DPU-based network message processing method according to some embodiments of the present disclosure;
FIG. 5 is a schematic flowchart of a DPU-based network message processing method according to some embodiments of the present disclosure;
FIG. 6 is a structural block diagram of a DPU-based network message processing apparatus according to an embodiment of the present disclosure; and
FIG. 7 is a schematic diagram of a hardware structure of a computer device according to an embodiment of the present disclosure.

### DETAILED DESCRIPTION OF EMBODIMENTS

In order to make the purpose, technical solutions, and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, but not all of the embodiments. Based on the embodiments in the present disclosure, all other embodiments obtained by those skilled in the art without creative efforts belong to the protection scope of the present disclosure.

At present, the association memory table is usually a content addressable memory (Content Addressable Memory, CAM) table, and the CAM (Content Addressable Memory Table) table is a hardware table structure used for fast searching and matching of data. CAM tables are commonly used in network devices, switches, routers, and other high-speed data processing systems to improve data processing speed and efficiency. However, at present, the size, matching speed, and resource utilization of the association memory table are difficult to meet the requirements of DPU network processing.

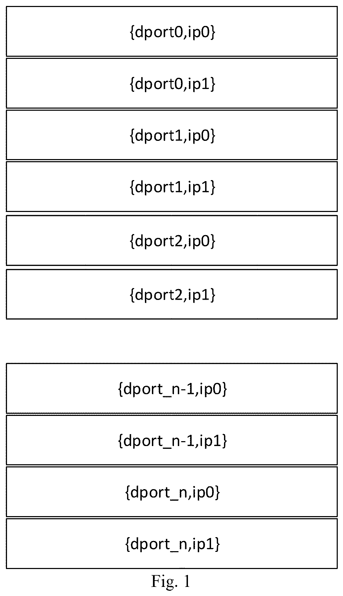

It is assumed that it is necessary to design a CAM entry to support matching of 512 "dports" and 2 "ips". As shown in FIG. 1, first, an entry needs to be created for each dport and ip combination. Each entry contains a dport and a corresponding ip value. Therefore, a total of 512 entries need to be created. In order to support 2 different ip values, two sub-entries need to be created for each entry to store different ip values respectively. Therefore, each entry needs to contain 2 sub-entries. Each sub-entry contains a dport and an ip value. The storage space occupied by each sub-entry is 2+16 bytes, representing dport (2 bytes) and ip (16 bytes), respectively. It may be determined that the storage space occupied by each entry is 2×(2+16) bytes.

The required storage space is calculated according to the following formula: S_old = 1024 × (2+16) = 18KByte. In the formula, S_old represents the required storage space in bytes. 2+16 is the length of the dport and ip values in each sub-entry in bytes. It is calculated that the required storage space is approximately 18 kilobytes.

It may be seen that the storage space consumption of the existing CAM table is relatively large. In the present application, by designing the association memory table using the communication port field and the flow processing information, the storage space may be effectively saved.

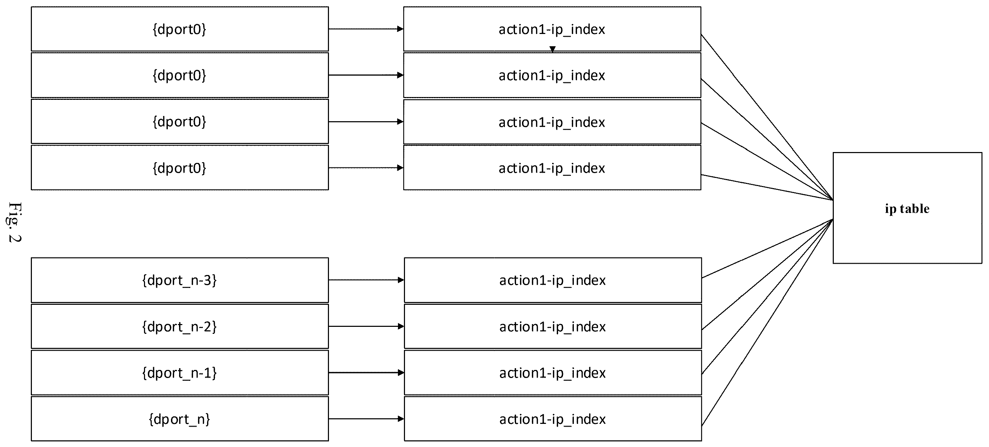

Specifically, as shown in FIG. 2, a dport field is set in each entry, then a corresponding action field is defined for the dport field of each entry, and the flow processing information is defined through the action field. In this way, each entry only needs to occupy the storage space of the dport field, and there is no need to separately store the dport and the ip. According to FIG. 1, in the previous scheme, each entry needs to store 2 pointers and 16 bytes of dport and ip information, so 1024 entries are needed to support matching of 512 dports and 2 ips, and the total storage space required is $1024×(2+16)=18KByte$. In the scheme of the present application, the formula is S_new = 512 × (2+1) + 2×16 = 2KByte. Among them, 512 × (2+1) is the storage space of the CAM table. The CAM table has a total of 512 entries, each entry has a 2-bit wide matching field (dport) and a 1-bit wide action field (action), so the total storage space is: 512 × (2 + 1), and 2 × 16 after the formula is used to store two 16-bit wide indexes pointed to by the action field, that is, the action field pointer, one index occupies 16 bits, and there are 2 indexes in total. It may be seen that the total storage space is reduced to 2KByte, which saves 9 times the storage resources compared with the previous scheme.

According to embodiments of the present disclosure, a DPU-based network message processing method, an apparatus, a device, and a medium are provided. It should be noted that the steps shown in the flowcharts of the drawings may be executed in a computer system, such as a set of computer executable instructions, and although a logical order is shown in the flowcharts, in some cases, the shown or described steps may be executed in an order different from that here.

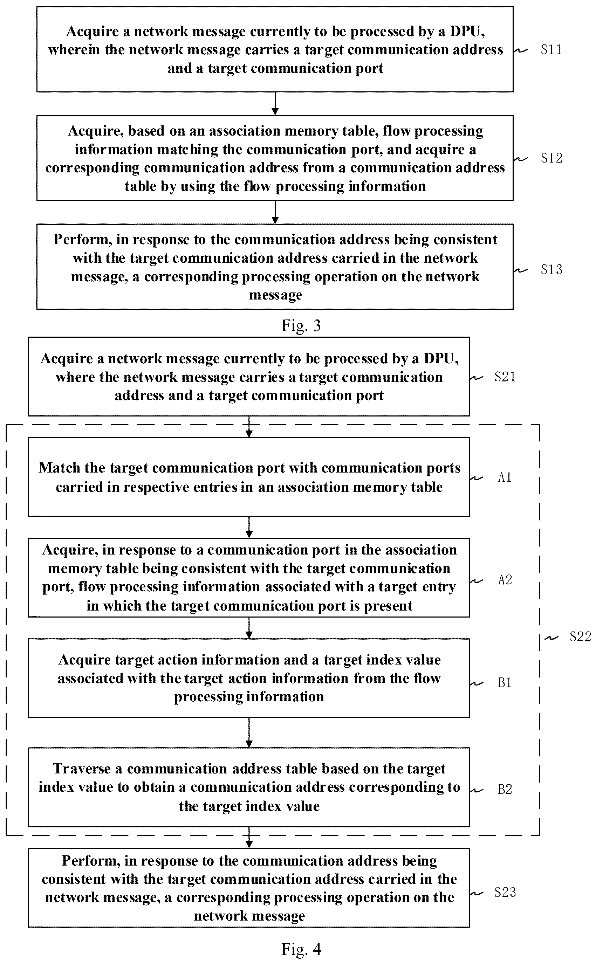

In this embodiment, a DPU-based network message processing method is provided. FIG. 3 is a flowchart of a DPU-based network message processing method according to an embodiment of the present disclosure. As shown in FIG. 3, the process includes the following steps.

Step S11: a network message currently to be processed by a DPU is acquired, where the network message carries a target communication address and a target communication port.

The method provided by the embodiment of the present disclosure is applied to a processor, and the processor referred to in the embodiment of the present disclosure may be a data processing unit (abbreviated as DPU). Acquiring the network message to be processed currently by the DPU may refer to network messages (also referred to as data packets) received from the network, and these network messages include the target communication address and the target communication port. The network message may be related to various services, especially in terms of network communication and data transmission.

Specifically, the DPU may be configured to forward an HTTP request of a client to a server, and the server receives the HTTP request from a browser of the client and returns the corresponding web page content. In this scenario, the DPU may acquire the network message to be processed, where the message carries the target communication address and the target communication port. The DPU uses a new socket to call the recv() method to receive the HTTP request message sent from the client. Then the HTTP request message is parsed to acquire the target communication address and the target communication port. Corresponding processing operations are performed based on the target communication address and the target communication port in the request message.

Step S12: flow processing information matching the communication port is acquired based on an association memory table, and a corresponding communication address is acquired from a communication address table by using the flow processing information.

In the embodiment of the present disclosure, first, the association memory table is created, which stores a mapping relationship between the communication port and the flow processing information. This table may contain two fields: the communication port and the flow processing information. The target communication port is acquired from the received network message. The flow processing information matching the target communication port is found by querying the association memory table. Then, the communication address table created in advance is acquired, which stores a mapping relationship between the flow processing information and the communication address. This table may contain two fields: the flow processing information and the communication address. The communication address matching the flow processing information is found by querying the communication address table.

Through the above steps, the flow processing information matching the communication port may be acquired based on the association memory table, and the corresponding communication address may be acquired from the communication address table by using the flow processing information. It may implement searching for the corresponding flow processing information according to the communication port and further acquiring the corresponding communication address, thereby completing the processing and forwarding operations of the network message.

Step S13: in response to the communication address being consistent with the target communication address carried in the network message, a corresponding processing operation is performed on the network message.

In the embodiment of the present disclosure, the target communication address is acquired from the received network message. The acquired target communication address is compared with the queried communication address. If the target communication address is consistent with the communication address, the corresponding processing operation is performed according to specific needs. This includes forwarding the message to a specific application for processing or modifying the message information. The specific processing operation may be different according to the specific application scenario and requirements. For example, in the scenario of a network server, if the target communication address is consistent with the communication address, the message may be delivered to a web server application for processing, and a corresponding response is acquired and sent back to the client.

The method provided by the embodiment of the present disclosure acquires the flow processing information matching the target communication port by using the association memory table. It may avoid traversing the entire memory table for matching, improve the speed and efficiency of matching, and reduce the storage space of the memory table. According to the acquired flow processing information, the communication address corresponding to the target communication address may be acquired from the communication address table. By directly searching the communication address table instead of traversing the entire memory table, the required communication address may be acquired faster. In response to the communication address being consistent with the target communication address carried in the network message, the corresponding processing operation is directly performed, thereby avoiding unnecessary processing and resource waste.

FIG. 4 is a flowchart of a DPU-based network message processing method according to an embodiment of the present disclosure. As shown in FIG. 4, the process includes the following steps.

Step S21: a network message currently to be processed by a DPU is acquired, where the network message carries a target communication address and a target communication port. For details, see step S11 in the above embodiment, which will not be repeated here.

Step S22: flow processing information matching the communication port is acquired based on an association memory table, and a corresponding communication address is acquired from a communication address table by using the flow processing information.

In the embodiment of the present disclosure, acquiring, based on the association memory table, the flow processing information matching the target communication port includes the following steps A1-A2.

Step A1: the target communication port is matched with the communication ports carried in respective entries in the association memory table.

In the embodiment of the present disclosure, as shown in FIG. 3, the association memory table includes a plurality of entries and an action field (action field), a communication port is set in each entry, a plurality of pieces of flow processing information are set in the action field, and each entry is associated with one piece of flow processing information in the action field. Therefore, first, each entry in the association memory table is traversed, and the target communication port is compared with the communication port carried in the entry. If the target communication port matches the communication port in a certain entry, it indicates that a matching entry is found.

Step A2: in response to a communication port in the association memory table being consistent with the target communication port, flow processing information, associated with a target entry in which the target communication port is present, is acquired.

In the embodiment of the present disclosure, if there is a communication port in the association memory table consistent with the target communication port, the flow processing information associated with the entry in which the communication port is present is acquired. As shown in FIG. 3, the flow processing information includes action information and an index value pointed to by the action information, and the index value points to the communication address table.

The method provided by the embodiment of the present disclosure combines the action information with the index value, which may implement flexible action processing. The action information may define various operations that need to be performed, such as forwarding, filtering, modification, etc., and the index value may point to the communication address table, which provides a dynamic processing capability. In this way, different actions and associated communication addresses may be defined according to specific needs and scenarios. At the same time, by using the index value to point to the communication address table, a large number of communication addresses may be easily expanded and managed. If it is necessary to add, delete, or modify the communication address, only the corresponding entry in the communication address table needs to be updated, and there is no need to modify the flow processing rule or the action information. This may make the system more flexible and scalable, and reduce the cost of modifying and maintaining the flow processing rule.

In the embodiment of the present disclosure, acquiring the corresponding communication address from the communication address table by using the flow processing information includes the following steps B1-B2.

Step B1: target action information and a target index value associated with the target action information are acquired from the flow processing information.

Step B2: the communication address table is traversed based on the target index value to obtain the communication address corresponding to the target index value.

In the embodiment of the present disclosure, the target index value associated with the target action information is acquired from the flow processing information. Then the communication address table is traversed, and the corresponding communication address is searched for according to the target index value. A for loop, a while loop, or other loop structures may be used for iteration. In each iteration, whether the index value of the current element is equal to the target index value is compared. If they are equal, the communication address corresponding to the target index value is found.

In this way, the communication address corresponding to the specific action may be quickly found and acquired in the flow processing information. By associating the action with the index value and performing mapping in the CAM table and the communication address table, the data traffic related to the specific action may be efficiently identified and processed.

Step S13: in response to the communication address being consistent with the target communication address carried in the network message, a corresponding processing operation is performed on the network message.

In the embodiment of the present disclosure, performing the corresponding processing operation on the network message includes: performing, on the network message, a processing operation indicated by the target action information.

As an example, the following flow processing information is stored in the association memory table of the DPU:
Flow processing information 1: action information: restarting the device-index value: ip_index1.

Flow processing information 2: action information: disconnecting-index value: ip_index2.

Flow processing information 3: action information: modifying the configuration-index value: ip_index3.

It is assumed that the communication address table is as follows: ip_index1: 192.168.1.10; ip_index2: 192.168.1.20; ip_index3: 192.168.1.30. When the DPU receives a network message, the target communication address in the message is 192.168.1.20. According to service requirements, the DPU may acquire the target action information and the target index value from the flow processing information, that is, "disconnecting" and 2. Then, the corresponding communication address 192.168.1.20 is found in the communication address table according to the target index value 2. Finally, the DPU determines whether the target communication address in the message is consistent with the found communication address. If they are consistent, the DPU performs a "disconnecting" operation, that is, it disconnects the connection with the device. It should be noted that the action information may be various device operation instructions, such as restarting the device, disconnecting, modifying the configuration, sending an alarm, etc., which are specifically determined based on service requirements. When performing an action, the DPU may send a related instruction to the device, or change the state of the device, or record a related log, and the specific execution action is also determined according to specific service requirements.

In the method provided by the embodiment of the present disclosure, by designing the association memory table using the communication port field and the flow processing information, the storage space may be effectively saved. Compared with the existing scheme, the method provided by the embodiment of the present disclosure saves storage resources, and the size of the storage space is reduced to 2 KB from the previous 18 KB. This is equivalent to saving 9 times the storage resources and improving the storage efficiency. It reduces hardware costs, improves performance, and uses storage resources more effectively.

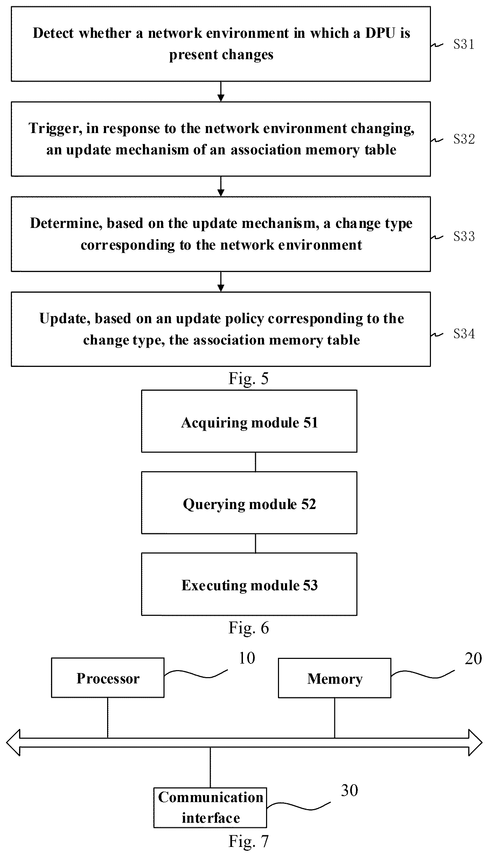

FIG. 5 is a flowchart of a DPU-based network message processing method according to an embodiment of the present disclosure. As shown in FIG. 5, the process includes the following steps.

Step S31: it is detected whether a network environment in which a DPU is present changes.

In the embodiment of the present disclosure, the DPU periodically sends a network detection packet or request to a certain node in the network through some network interfaces or protocols, such as ARP (Address Resolution Protocol) or ICMP (Internet Control Message Protocol), and receives a response returned by the node. By comparing previous network environment information and current received response information, the DPU may determine whether the network environment has changed. For example, the DPU may detect a change of an IP address, a change of a state of a network device, a change of availability of a network connection, etc.

The specific operation process is as follows: the DPU periodically sends the network detection packet or request to a specified node, such as a target IP address. The DPU waits for and receives the response of the node. The previous recorded network environment information is compared with the current received response information. If a change is found, such as a different IP address, a change of the device state, or an unavailable connection, the DPU performs corresponding processing according to service requirements. For example, it may record a log, send an alarm, reconfigure network parameters, etc. In this way, the DPU may perceive the change of the network environment in real time and perform corresponding processing according to the change to ensure the stability and reliability of the network.

Step S32: in response to the network environment changing, an update mechanism of an association memory table is triggered .

In the embodiment of the present disclosure, when the DPU detects that the network environment has changed, for example, the IP address, state, or connection of the device has changed, the DPU identifies the type of change. According to the type of change, the association memory table that needs to be updated is determined. When it is determined that the memory table needs to be updated, the DPU performs corresponding operations to update the data in the memory table to maintain consistency with the network environment.

The method provided by the embodiment of the present disclosure may ensure that the data in the memory table is synchronized with the changes of the actual network environment by triggering the update mechanism of the association memory table. This may provide accurate information for network management and operation, and ensure the stability and reliability of the network.

Step S33: a change type corresponding to the network environment is determined based on the update mechanism.

In the embodiment of the present disclosure, the DPU detects the connectivity of the network link periodically or in real time. By sending a network detection packet (such as an ICMP Echo Request) or using a dedicated network monitoring protocol (such as PING, Traceroute), the DPU may determine whether the link is normally connected. If the link fails, the DPU records corresponding error information or abnormal state in the monitoring result. The DPU may also determine whether a security event has occurred by monitoring abnormal behavior or specific security events in network communication. This may be achieved through network traffic analysis, intrusion detection system (IDS), log analysis, etc. Security events may include network attacks (such as DDoS, intrusion attempts), malware propagation, abnormal login activities, etc. The DPU detects and warns or records discovered security events according to predefined rules or algorithms.

According to the monitoring result of the network link connectivity, the DPU may determine whether the link is normal. If the link connection is interrupted or the delay exceeds the threshold, it may be determined as a link failure. According to the monitoring result of the security event, the DPU may determine whether the security event has occurred. If abnormal network activities or indicators related to known security events are detected, it may be determined that a security event has occurred. The DPU identifies the change types of the network link failure and the security event, so that subsequent processing and update operations may distinguish and perform corresponding actions according to different types. An enumeration value, a specific mark, or an agreed manner may be used to identify the change type.

In addition, the DPU compares the network information acquired currently with the information recorded previously. The information recorded previously may be a previous state stored in a database, a cache, or other data structures. Through comparison, changes in the network environment may be discovered. According to the result of comparison, the change type corresponding to the network environment may be determined based on the update mechanism. These change types may be: an IP address change, a device state change, a connection state change, a device addition or removal, etc.

Step S34: the association memory table is updated based on an update policy corresponding to the change type.

In the embodiment of the present disclosure, updating, according to the update policy corresponding to the change type, the association memory table includes the following steps C1-C3.

Step C1: in response to the change type being a link failure occurs in the network environment, a failure link in the network environment is acquired.

In the embodiment of the present disclosure, when the DPU detects that the link has failed, it identifies the failed link. It may be identified by recording the IP address, device identification or other unique identification of the failed link. According to the identification of the failed link, the DPU may acquire detailed information of the failed link through network device configuration or other related information sources.

A specific acquisition manner may include: querying state information of the network device: querying the state, interface information, error statistics, etc. of the device through a management interface (such as SNMP) of the network device to acquire the information of the failed link. Through the analysis of network traffic and link data, indicators such as traffic, packet loss rate, and delay of the failed link may be determined, and the fault may be further present. According to the acquired information of the failed link, the DPU may perform diagnosis and location work to determine the specific cause and location of the fault. This may involve further network device tracking, network topology analysis, hardware fault troubleshooting, etc. Network management employee tools, network monitoring systems or other network analysis tools may be used to assist in diagnosing and locating faults.

Step C2: a first communication address corresponding to the failure link and a first index value corresponding to the first communication address are queried.

In the embodiment of the present disclosure, the communication address of the failed link is acquired according to the information of the failed link acquired previously. The communication address may be an IP address or other identifiers. The corresponding first index value is searched for in the communication address table through the first communication address. The communication address table is an association memory table that stores a mapping relationship between the communication address and the index value.

Step C3: first flow processing information corresponding to the first index value is updated to an invalid state in the association memory table.

In the embodiment of the present disclosure, the corresponding flow processing information is found in the association memory table according to the first index value. Then the found flow processing information is updated to the invalid state. The update may be to modify a related field value or add a specific mark to the record, indicating that the flow processing information has expired.

In the embodiment of the present disclosure, the first communication address and the first index value corresponding to the failure link may be queried, and the first flow processing information corresponding to the first index value is updated to the invalid state in the association memory table. In this way, effective management and processing of the failure link may be achieved to ensure the reliability and stability of the network.

In the embodiment of the present disclosure, updating, according to the update policy corresponding to the change type, the association memory table includes the following steps D1-D3.

Step D1: in response to the change type being a security event that occurs in the network environment, a new link and a second communication address corresponding to the new link are acquired.

In the embodiment of the present disclosure, when the DPU detects the new link, it identifies the new link. Related information of the new link may be recorded, such as device identification, IP address, port, etc. According to the identification of the new link, detailed information of the new link may be acquired through network device configuration or other related information sources.

A specific acquisition manner may include: querying state information of the network device: querying the state, interface information, etc. of the device through a management interface (such as SNMP) of the network device to acquire the related information of the new link. Analyzing network traffic and link data: through the analysis of network traffic and link data, the communication address, traffic, target IP address, etc. of the new link may be determined. The second communication address is acquired according to the acquired information of the new link. The communication address may be an IP address or other identifiers.

Step D2: a second index value corresponding to the second communication address is acquired.

In the embodiment of the present disclosure, the corresponding index value is searched for in the associated index table according to the second communication address. The index table stores the mapping relationship between the communication address and the index value. 3. acquiring the second index value: acquiring the second index value according to the query result.

Step D3: second flow processing information is acquired based on the second index value and action information corresponding to the new link, and the second flow processing information is updated to the association memory table.

In the embodiment of the present disclosure, first, the related information of the new link is determined, such as a source address, a destination address, a protocol type, etc. Then, the second flow processing information is acquired according to the information and the existing flow processing policy. Finally, the second flow processing information is updated to the association memory table. The update operation may be completed by insertion, update, or replacement.

In this embodiment, a DPU-based network message processing apparatus is further provided. The apparatus is configured to implement the above embodiments and preferred implementations, which will not be repeated here. As used below, the term "module" may implement a combination of software and/or hardware for a predetermined function. Although the apparatus described in the following embodiments is preferably implemented in software, implementation in hardware, or a combination of software and hardware is also possible and contemplated.

This embodiment provides a DPU-based network message processing apparatus, as shown in FIG. 6, including:
an acquiring module 51, configured to acquire a network message currently to be processed by a DPU, where the network message carries a target communication address and a target communication port;
a querying module 52, configured to acquire, based on an association memory table, flow processing information matching the communication port, and acquire a corresponding communication address from a communication address table by using the flow processing information; and
a performing module 53, configured to perform, in response to the communication address being consistent with the target communication address carried in the network message, a corresponding processing operation on the network message.

In the embodiment of the present disclosure, the querying module 52 is configured to match the target communication port with communication ports carried in respective entries in the association memory table; and acquire, in response to there is a communication port consistent with the target communication port in the association memory table, flow processing information associated with a target entry in which the target communication port is present.

In the embodiment of the present disclosure, the querying module 52 is configured to acquire target action information and a target index value associated with the target action information from the flow processing information; and traverse the communication address table according to the target index value to obtain the communication address corresponding to the target index value.

In the embodiment of the present disclosure, the executing module 53 is configured to perform, on the network message, a processing operation indicated by the target action information.

In the embodiment of the present disclosure, the apparatus further includes an updating module, and the updating module includes:
a detecting unit, configured to detect whether a network environment in which the DPU is present changes;
a controlling unit, configured to trigger, in response to the network environment changes, an update mechanism of the association memory table;
an analyzing unit, configured to determine, based on the update mechanism, a change type corresponding to the network environment; and
a processing unit, configured to update, based on an update policy corresponding to the change type, the association memory table.

In the embodiment of the present disclosure, the processing unit is configured to: in response to the change type being a link failure occurs in the network environment, acquire a failed link in the network environment; query a first communication address corresponding to the failed link and a first index value corresponding to the first communication address; and update, in the association memory table, first flow processing information corresponding to the first index value to an invalid state.

In the embodiment of the present disclosure, the processing unit is configured to: in response to the change type being a security event occurs in the network environment, acquire a new link and a second communication address corresponding to the new link; acquire a second index value corresponding to the second communication address; and acquire second flow processing information based on the second index value and action information corresponding to the new link, and update the second flow processing information to the association memory table.

Referring to FIG. 7, FIG. 7 is a schematic structural diagram of a computer device provided by an optional embodiment of the present disclosure. As shown in FIG. 7, the computer device includes: one or more processors 10, a memory 20, and interfaces for connecting various components, including high-speed interfaces and low-speed interfaces. The components communicate with each other using different buses and may be installed on a common main board or in other ways as needed. The processor may process instructions executed within the computer device, including instructions stored in or on the memory to display graphical information of GUI on an external input/output apparatus (such as a display device coupled to the interface). In some optional implementations, if required, multiple processors and/or buses may be used with multiple memories and multiple memories. Similarly, multiple computer devices may be connected, and each device provides some necessary operations (for example, as a server array, a group of blade servers, or a multi-processor system).

The processor 10 may be a central processing unit, a network processor, or a combination thereof. The processor 10 may further include a hardware chip. The hardware chip may be an application-specific integrated circuit, a programmable logic device or a combination thereof. The programmable logic device may be a complex programmable logic device, a field programmable logic gate array, a generic array logic or any combination thereof.

The memory 20 stores instructions executable by at least one processor 10, so that at least one processor 10 executes the method shown in the above embodiments.

The memory 20 may include a program storage area and a data storage area, where the program storage area may store an application program required by an operating system and at least one function; the data storage area may store data created according to the use of the computer device for displaying a mini-program landing page, etc. In addition, the memory 20 may include a high-speed random access memory or a non-transitory memory, such as at least one magnetic disk storage device, a flash memory device, or other non-transitory solid-state storage devices. In some optional implementations, the memory 20 optionally includes memories remotely provided with respect to the processor 10, and these remote memories may be connected to the computer device through a network. Examples of the above network include but not limited to Internet, an intranet, a local area network, a mobile communication network and a combination thereof.

The memory 20 may include a volatile memory, such as a random access memory; the memory may also include a non-volatile memory, such as a flash memory, a hard disk or a solid state disk; the memory 20 may also include a combination of the above kinds of memories.

The computer device further includes a communication interface 30, configured to communicate between the computer device and other devices or communication networks.

An embodiment of the present disclosure further provides a computer-readable storage medium. The method according to the embodiment of the present disclosure may be implemented in hardware and firmware, or implemented as computer code that may be recorded in a storage medium or originally stored in a remote storage medium or a non-transitory machine-readable storage medium downloaded through a network and will be stored in a local storage medium, so that the method described herein may be processed by such software stored on the storage medium using a general-purpose computer, a dedicated processor, or programmable or dedicated hardware. The storage medium may be a magnetic disk, an optical disk, a read-only memory, a random access memory, a flash memory, a hard disk or a solid state disk, etc. Further, the storage medium may also include a combination of the above kinds of memories. It may be understood that the computer, the processor, the microprocessor controller or the programmable hardware includes a storage component that may store or receive software or computer code, and when the software or computer code is accessed and executed by the computer, the processor or the hardware, the method shown in the above embodiments is implemented.

Although the embodiments of the present disclosure are described in combination with the drawings, those skilled in the art may make various modifications and variations without departing from the spirit and scope of the present disclosure, and such modifications and variations all fall within the scope defined by the appended claims.

## Claims

1. A data processing unit (DPU) -based network message processing method, comprising:
acquiring a network message currently to be processed by a DPU, wherein the network message carries a target communication address and a target communication port;
acquiring, based on an association memory table, flow processing information matching the communication port, and acquiring a corresponding communication address from a communication address table by using the flow processing information; and
performing, in response to the communication address being consistent with the target communication address carried in the network message, a corresponding processing operation on the network message.

2. The method of claim 1, wherein acquiring, based on the association memory table, the flow processing information matching the target communication port comprises:
matching the target communication port with communication ports carried in respective entries in the association memory table; and
acquiring, in response to a communication port in the association memory table being consistent with the target communication port, flow processing information associated with a target entry in which the target communication port is present.

3. The method of claim 1, wherein acquiring the corresponding communication address from the communication address table by using the flow processing information comprises:
acquiring target action information and a target index value associated with the target action information from the flow processing information; and
traversing the communication address table based on the target index value to obtain the communication address corresponding to the target index value.

4. The method of claim 3, wherein performing the corresponding processing operation on the network message comprises:
performing, on the network message, a processing operation indicated by the target action information.

5. The method of claim 1, further comprising:
detecting whether a network environment in which the DPU is present changes;
triggering, in response to the network environment changing, an update mechanism of the association memory table;
determining, based on the update mechanism, a change type corresponding to the network environment; and
updating, according to an update policy corresponding to the change type, the association memory table.

6. The method of claim 5, wherein updating, based on the update policy corresponding to the change type, the association memory table comprises:
acquiring, in response to the change type being a link failure that occurs in the network environment, a failed link in the network environment;
querying a first communication address corresponding to the failed link and a first index value corresponding to the first communication address; and
updating, in the association memory table, first flow processing information corresponding to the first index value to an invalid state.

7. The method of claim 5, wherein updating, based on the update policy corresponding to the change type, the association memory table comprises:
acquiring, in response to the change type being a security event that occurs in the network environment, a new link and a second communication address corresponding to the new link;
acquiring a second index value corresponding to the second communication address; and
acquiring second flow processing information based on the second index value and action information corresponding to the new link, and updating the second flow processing information to the association memory table.

8. A data processing unit (DPU)-based network message processing apparatus, comprising:
an acquiring module, configured to acquire a network message currently to be processed by a DPU, wherein the network message carries a target communication address and a target communication port;
a querying module, configured to acquire, based on an association memory table, flow processing information matching the communication port, and acquire a corresponding communication address from a communication address table by using the flow processing information; and
a performing module, configured to perform, in response to the communication address being consistent with the target communication address carried in the network message, a corresponding processing operation on the network message.

9. A computer device, comprising:
a memory and a processor connected to each other in communication, wherein the memory stores computer instructions, and the processor executes the computer instructions to execute the method of any of claims 1 to 7.

10. A computer-readable storage medium storing computer instructions, wherein the computer instructions are used to cause a computer to execute the method of any of claims 1 to 7.
